# FASCICULE DE BREVET EUROPEEN

(11) **EP 0 948 223 B1**
(45) Date de publication et mention de la délivrance du brevet: **09.03.2005**
(21) Numéro de dépôt: 99400544.5
(22) Date de dépôt: 08.03.1999
(51) Int. Cl.: H04Q 7/30

(54) **Installation mixte de téléphone**
Kombinierte Telefonanlage
Combined telephone installation

(30) Priorité: 30.03.1998 FR 9803894
(43) Date de publication de la demande: 06.10.1999
(73) Titulaire: ALCATEL, 75008 Paris (FR)
(72) Inventeur: Auvray, Gérard, 95870 Bezons (FR)
(74) Mandataire: Lamoureux, Bernard

(56) Documents cités:
- EP-A- 0 740 482
- WO-A-95/01070
- GB-A- 2 282 735
- GB-A- 2 295 069

## Description

La présente invention a pour objet une installation mixte de téléphone, c'est à dire une installation de téléphone utilisable autant en relation avec un réseau public qu'avec un réseau privé. Dans le cadre de cette installation, les téléphones utilisés seront des postes téléphoniques mobiles. Le but de l'invention sera d'augmenter la fiabilité des différents composants de l'installation.

On connaît les installations de téléphonie publique par mobiles, comportant des stations de bases disséminées sur un territoire et des postes téléphoniques mobiles susceptibles d'entrer en relation avec ces stations de base. Le principe de l'entrée en relation comporte, au moment de la mise en service d'un poste téléphonique mobile, l'émission d'un message de reconnaissance et d'identification du poste téléphonique mobile, puis l'émission cyclique d'un message de localisation envoyé par le poste téléphonique mobile aux stations de base.

En effet, l'utilisateur d'un poste téléphonique mobile étant susceptible de se déplacer, il est nécessaire de le suivre à la trace pour pouvoir le raccorder à tout moment. La trace est constituée par l'émission cyclique ou continue de ce signal de localisation. Les différentes stations de base reçoivent le signal de localisation et, en fonction du niveau de signal reçu par chacune d'elle, une de ces stations est désignée comme étant celle qui devra être en relation privilégiée avec le poste téléphonique mobile. Au fur et à mesure du déplacement de l'utilisateur, la désignation de cette station de base peut évoluer de place en place. Les signaux de reconnaissance, d'identification, de localisation ainsi que les signaux de parole sont transmis des mobiles aux stations de base et réciproquement par des émissions radioélectriques de porteuses modulées, en phase et ou en fréquence. Dans le cadre d'une utilisation publique, les gammes de fréquence des porteuses modulées sont normalisées : par exemple, elles sont de 900 MHz dans le cadre du GSM, de 1800 MHz dans le cadre du DCS. D'autres gammes de fréquence sont disponibles pour d'autres normalisations et protocoles.

Il est apparu utile de transposer ce type d'installation dans le cadre d'une utilisation privée. En pratique, un même équipement de station de base a été mis à la disposition des particuliers, avec un fonctionnement identique sauf en ce qui concerne la gamme de fréquence, qui est alors cantonnée aux gammes de fréquences utilisables par les particuliers (27 MHz en général).

On connaît d'autres modes d'utilisation de téléphones mobiles, notamment celui distribué en France par France Télécom et connu sous le nom de Bibop®. Dans ce mode d'utilisation, qui peut être également mixte, publique, privée, il y a émission, au début d'une session, d'un message d'identification. Il n'y a cependant pas d'émission cyclique de messages de localisation. En effet, avec ce type d'utilisation, l'utilisateur n'est pas autorisé à se déplacer au-delà de la limite de réception correcte de la station de base auprès de laquelle il s'est fait reconnaître en début de session. En pratique, les sessions d'utilisation publique ont une durée limitée, par exemple de quatre heures. Au delà, la trace est perdue. La station de base ignore la localisation du poste téléphonique mobile et n'y achemine plus les communications entrantes.

Compte tenu des contraintes d'interdiction de déplacement et de limite de la durée d'une session, ce système est difficile à utiliser.

Le document GB 2 282 735 décrit une installation comprenant un téléphone bi-mode, et une station de base privée qui détecte la présence du téléphone sur le chargeur, et commande la commutation automatique du téléphone vers le mode privé. Le document EP 0 740 482 décrit un procédé pour détecter la présence du téléphone sur la station de base privée.

Les équipements mis en oeuvre dans ces installations ont une durée de vie. Celle-ci est d'autant plus courte que les équipements sont utilisés plus fréquemment. Dans le cadre d'une installation mixte, évidemment l'utilisation est permanente, l'usure est plus rapide.

L'invention a pour objet d'augmenter cette durée de vie ainsi que de limiter le plus possible les consommations électriques et les émissions radioélectriques qui occupent l'espace fréquentiel en permanence.

Selon l'invention, on atteint ces objectifs en prévoyant qu'en mode d'utilisation privée, les messages de localisation, envoyés cycliquement ou continûment par les postes téléphoniques mobiles aux stations de base privées, ne seront pas émis lorsque le poste téléphonique mobile sera physiquement et électriquement relié à la station de base privée, notamment quand il y sera accroché pour provoquer la recharge électrique de sa batterie.

L'invention a donc pour objet une installation mixte de téléphone comportant une station de base privée, des stations de base d'un réseau public et un téléphone mobile, le téléphone mobile étant muni d'un commutateur pour passer d'un mode d'utilisation de la station de base privée à un mode d'utilisation d'une station de base publique et réciproquement, et comportant un circuit pour émettre un signal de localisation à destination d'une station de base, la station de base privée comportant un moyen de maintien physique et de connexion électrique du téléphone mobile, caractérisée en ce qu'elle comporte un détecteur pour détecter que le téléphone privé est maintenu sur la station de base privée et un circuit de commande pour émettre un ordre de cessation d'émission dudit signal de localisation, le téléphone mobile comportant un circuit esclave pour modifier son mode d'utilisation en fonction de cet ordre.

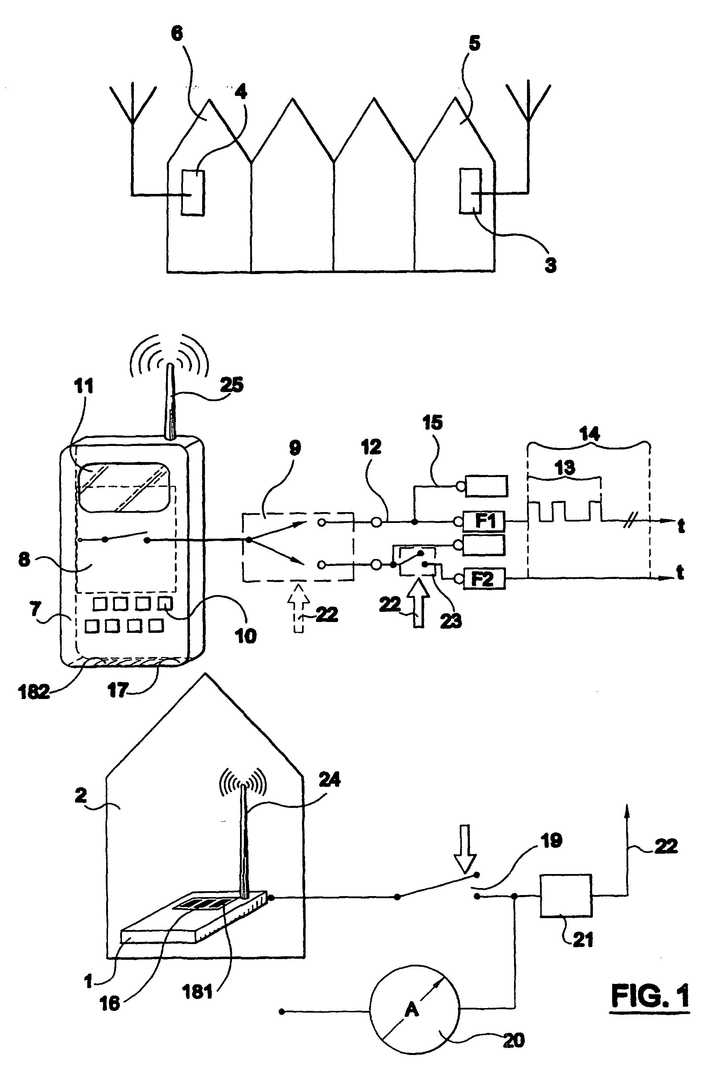

L'invention sera mieux comprise à la lecture de la description qui suit et à l'examen de la figure 1 qui l'accompagne. Celle-ci n'est donnée qu'à titre indicatif et nullement limitatif de l'invention.

La figure 1 montre une installation mixte de téléphone selon l'invention. Cette installation comporte une station de base privée 1. La station de base privée 1 est par exemple disposée à l'intérieur du domicile 2 d'un particulier. L'installation comporte encore des stations de base 3 et 4 d'un réseau public. Par exemple, les stations de base 3 et 4 sont disposées en façade de maisons 5 et 6 devant lesquelles le porteur d'un téléphone mobile peut se déplacer librement sur le domaine public. L'installation comporte également, au moins un téléphone mobile 7. D'une manière conventionnelle ce téléphone mobile comporte un circuit 8 pour être mis en service. En pratique, ce circuit comporte des fonctions électriques et des fonctions de reconnaissance. Les fonctions de reconnaissance permettent de n'autoriser la mise en service du téléphone mobile que par un utilisateur autorisé.

En pratique, cette fonction de mise en service comporte un protocole de composition d'un code secret d'utilisateur. La fonction de mise en service électrique est assimilable à un interrupteur électrique qui commute l'alimentation électrique d'une batterie du poste téléphonique mobile au circuit fonctionnel de ce poste téléphonique mobile. En fait, cette mise en service est plus complexe. Après la reconnaissance de ce que l'utilisateur du poste téléphonique mobile 7 est un utilisateur autorisé, le poste téléphonique mobile 7 envoie un message d'identification aux stations de base de son environnement. Une de ces stations, par exemple celle qui reçoit le signal le plus fortement est choisie. Elle assigne différentes contraintes au poste téléphonique mobile 7 : niveau d'émission, gamme de fréquence, cadence de synchronisation et ainsi de suite. En outre cette station de base diffuse l'identification de ce poste téléphonique mobile 7 aux organes centraux du réseau pour que les communications téléphoniques puissent être acheminées à ce poste téléphonique mobile 7.

Le poste téléphonique mobile 7 peut comporter également un commutateur 9 pour passer d'un mode d'utilisation d'une station de base privée 1 à un mode d'utilisation d'une station de base publique : un mode d'utilisation du réseau public. Evidemment la phase d'identification se produit selon le mode choisi avec la ou les stations de base correspondantes.

Le commutateur 9 est montré schématiquement. Il peut comporter un commutateur physique. En général il comportera une liaison à un microprocesseur contenu dans le poste téléphonique mobile 7 et dont la fonction de commutation privé / public est engendrée par les actions d'un opérateur sur des touches 10 apparentes en face avant du poste téléphonique mobile 7. Pour mener à bien ces diverses opérations de mise en service avec l'interrupteur 8 et de commutation avec le commutateur 9, le poste téléphonique mobile comporte en général un écran 11 sur lequel sont affichées, en clair généralement, différentes informations, notamment celles relatives au fonctionnement du poste téléphonique mobile 7.

Dans l'état de la technique, pour chacun des modes privé ou public envisagés, un même type de mise en service était prévu. Ceci avait pour effet, notamment, de simplifier à la fois la réalisation de l'équipement et la programmation de son fonctionnement selon les différents modes.

On a ainsi représenté schématiquement dans l'utilisation publique 12, une fonction F1 d'émission cyclique d'un message 13 de localisation. Par exemple, au cours d'un cycle 14, qui dans le cadre de l'utilisation GSM dure environ deux secondes, au cours d'une fenêtre temporelle située en début du cycle, chaque poste téléphonique mobile envoie un message 13 de localisation. La réception de ce message 13 dans les stations de base 3 et 4 permet de suivre le déplacement de l'utilisateur muni de son téléphone mobile 7. D'autres fonctions 15 sont mises en service dans le mode public : notamment, la fonction d'émission et de réception de paroles pour se servir du poste de téléphone mobile en conversation. Ces autres fonctions sont figurativement représentées par une liaison à un circuit. Dans la réalité, il s'agira d'une fonction proposée par le microprocesseur du poste 7. Dans le cadre de l'utilisation privée, des fonctions similaires sont accessibles. Ainsi une fonction de localisation F2 sera le pendant de la fonction F1. Il faut bien voir que cette dualité est particulièrement simple à réaliser. Il suffit de modifier les paramètres des fonctions tout en les conservant. Ainsi, pour simplifier, la fonction d'émission sera la même d'un mode à l'autre : seul le paramètre de fréquence (900 MHz ou 27MHz) sera changé.

En variante, la commutation publique / privé sera automatique. Ainsi, quand une station de base privée reçoit un signal de localisation émis par un poste téléphonique mobile qui lui est affecté (c'est à dire pour lequel la station de base privée connaît déjà des signaux de reconnaissance qui ont été imposés à l'origine), elle assigne différentes contraintes à ce poste téléphonique mobile. Essentiellement, elle lui impose des paramètres de mise en relation de ce poste téléphonique mobile avec cette station de base privée. En sens inverse, quand un utilisateur s'éloigne de son domicile, son poste téléphonique mobile ne reçoit plus les réponses de sa station de base privée. Mais il reçoit de mieux en mieux des réponses d'une station de base publique. Il entre alors en relation avec cette dernière à la première localisation pour lequel le niveau de réception des signaux est supérieur à un niveau précédent. Dans les deux cas, le basculement public / privé est alors automatique.

D'une manière connue, la station de base privée comporte un socle 16 permettant le maintien physique du poste téléphonique mobile 7. Ce socle 16, qui peut être de formes diverses, possède essentiellement une cavité pour encastrer le pied 17 du poste téléphonique mobile 7, ou un crochet destiné à s'engager dans une cavité du poste téléphonique mobile (ou réciproquement). Cette cavité ou ce crochet sont associés généralement à un jeu de contacts électriques 181. Les contacts électriques 181 permettent de manière connue d'entrer en relation avec des contacts 182 du poste 7, notamment pour recharger la batterie du poste téléphonique mobile, quand celui-ci est engagé dans le socle 16.

Selon une caractéristique essentielle de l'invention, la station de base privée 1 comporte un détecteur pour détecter que le téléphone mobile 7 y est maintenu. Par exemple, au fond de la cavité 16, on disposera un interrupteur mécanique 19 comportant notamment un levier qui permettra de délivrer un signal représentatif de la mise en place du téléphone mobile 7 dans le socle 16.

En variante, et pour simplifier la fabrication, on pourra préférer mesurer avec un circuit de mesure 20, le courant électrique de charge de la batterie du poste téléphonique mobile, alors que ce courant électrique de charge est délivré par la station de base privée 1. Eventuellement, le pied 17 du poste 7 comporte d'autres connecteurs de signalisation, qui entrent en relation avec les broches correspondantes du socle 16. On utilise alors des signaux disponibles sur ces connecteurs de signalisation pour informer la station de base privée 1 de ce que le poste téléphonique mobile 7 est raccroché (placé sur le socle 16). A partir du signal de détection, la station de base privée 1 produit dans un circuit de commande 21, un ordre 22 destiné à modifier le mode d'utilisation du téléphone mobile. Cette modification de mode est fonction de la détection.

Selon une autre caractéristique essentielle de l'invention, le téléphone mobile comporte alors un circuit esclave 23 pour recevoir l'ordre 22 et pour modifier son mode d'utilisation en fonction de la nature de cet ordre. Dans un exemple particulier d'utilisation, le circuit 23 comportera, fonctionnellement, un interrupteur pour faire cesser l'émission cyclique (ou continue) du message de localisation 13. Les circuits 21 et 23 ne seront bien entendu que des fonctionnalités particulières des microprocesseurs qui gèrent la station de base privée 1 et le poste téléphonique mobile 7 respectivement.

En effet, dans l'invention, on s'est rendu compte que, si le poste téléphonique mobile est situé sur le socle 16, dans ce cas il n'est plus besoin de le localiser : on sait où il est. De ce fait, l'émission des signaux de localisation n'est plus nécessaire. Elle n'est plus entreprise. Il n'y a plus d'émissions inutiles dans l'espace fréquentiel. Il n'y a plus de consommation électrique inutile. Le poste téléphonique mobile 7 est moins sollicité : sa durée de vie en est allongée.

En variante, on peut prévoir que l'ordre 22 agira directement ou aussi sur le mode de commutation public / privé organisé par le commutateur 9. Dans ce cas, ce commutateur 9 pourra être actionné de deux façons. D'une première façon, à la mode ancienne, automatiquement ou manuellement, l'utilisateur composant la séquence de touches sur les boutons 10 pour provoquer cette commutation. Selon le perfectionnement de l'invention, il lui suffira de placer son poste téléphonique mobile sur le socle 16 pour que la commutation 9 se produise immédiatement, en même temps bien entendu que l'interrupteur 23 sera ouvert pour faire cesser les émissions de localisations inutiles.

Dès que le poste téléphonique mobile est décroché de son support, on provoque l'émission d'un ordre 22 contraire, ayant pour effet de relancer les émissions de localisation. Autant l'ordre 22 qui fait cesser les émissions peut être transmis par l'intermédiaire des plots 18, éventuellement par courant porteur, ou par émission radioélectrique, autant lorsque le poste mobile 7 est décroché du socle 16, l'ordre 22 contraire sera de préférence émis sous une forme radioélectrique par une antenne 24 de la station de base privée en relation radioélectrique avec l'antenne 25 du poste téléphonique mobile 7. De préférence, l'ordre 22 contraire sera ainsi le premier ordre émis par la station de base privée 1 au moment du décrochage. Il sera un complément au message d'identification et ou de localisation échangé entre la station de base privée et le poste téléphonique mobile 7.

Dans le mode d'utilisation privée, l'émission cyclique par le poste téléphonique mobile 7 du message de localisation, servira essentiellement à la station de base privée 1 à moduler la puissance de ses émissions en fonction de l'éloignement du poste téléphonique mobile 7. En effet, plus celui-ci est éloigné, moins ses signaux de localisation seront reçus dans la station de base privée 1 avec force.

Au besoin, les détecteurs 19 et 20 et le circuit de commande 21 peuvent se situer dans le poste téléphonique mobile 7 dans la mesure où ce dernier peut lui même posséder des moyens de détecter qu'il est placé sur le socle 16. De ce fait, il convient de comprendre que c'est l'installation qui possède des moyens de détecter que le poste téléphonique mobile 7 est raccroché, même si, dans une réalisation préférée, seule la station de base privée en sera munie.

## Revendications

1. Installation mixte de téléphone comportant une station de base privée (1), des stations de base (3, 4) d'un réseau public et un téléphone mobile (7), le téléphone mobile étant muni d'un commutateur (9) pour passer d'un mode d'utilisation de la station de base privée à un mode d'utilisation d'une station de base publique et réciproquement, et comportant un circuit (F1, F2) pour émettre un signal de localisation (13) à destination d'une station de base, la station de base privée comportant un moyen de maintien physique (16) et de connexion électrique (181-182) du téléphone mobile, où l'installation comporte un détecteur (19, 20) pour détecter que le téléphone mobile est maintenu sur la station de base privée et l'installation étant **caracterisée en ce qu'**elle comporte un circuit (21) de commande pour émettre un ordre (22)de cessation d'émission dudit signal de localisation, le téléphone mobile comportant un circuit esclave (23) pour modifier son mode d'utilisation en fonction de cet ordre.

2. Installation selon la revendication 1, **caractérisée en ce que** le signal de localisation est cyclique ou continu.

3. Installation selon l'une des revendications 1 à 2, **caractérisée en ce que** le détecteur est un détecteur électronique et comporte un circuit de mesure (20) d'un courant de charge de la batterie du téléphone mobile par la station de base privée.

4. Installation selon l'une des revendications 1 à 3, **caractérisée en ce que** la station de base privée comporte le détecteur de maintien sur la station de base privée et le circuit de commande.

5. Installation selon l'une des revendications 1 à 4, **caractérisée en ce que** le téléphone mobile comporte le détecteur de maintien sur la station de base privée, le circuit de commande, et le circuit esclave.

## Patentansprüche

1. Kombinierte Telefonanlage, bestehend aus einer privaten Basisstation (1), Basisstationen (3, 4) eines öffentlichen Netzes und einem Mobiltelefon (7), das mit einem Schalter (9) ausgerüstet ist, um von der Betriebsart als private Basisstation in die Betriebsart als öffentliche Basisstation umzuschalten und umgekehrt; diese enthält zudem einen Schaltkreis (F1, F2) zur Übertragung eines Standortsignals (13) an eine Basisstation, wobei die private Basisstation eine physische Haltevorrichtung (16) sowie eine elektrische Anschlussvorrichtung (181-182) für das Mobiltelefon aufweist, wobei die Anlage einen Detektor (19, 20) beinhaltet, der erfasst, wenn das Mobiltelefon in der privaten Basisstation eingelegt ist, und wobei die Anlage **dadurch gekennzeichnet ist, dass** sie einen Steuerschaltkreis (21) zur Übertragung eines Befehls (22) beinhaltet, mit dem die Übertragung des genannten Standortsignals eingestellt wird, wobei das Mobiltelefon einen Slave-Schaltkreis (23) beinhaltet, mit dem seine Betriebsart in Abhängigkeit von diesem Befehl geändert werden kann.

2. Anlage gemäß Anspruch 1, **dadurch gekennzeichnet, dass** das Standortsignal in regelmäßigen Abständen oder kontinuierlich abgesetzt wird.

3. Anlage gemäß einem der Ansprüche 1 bis 2, **dadurch gekennzeichnet, dass** es sich bei dem Detektor um einen elektronischen Detektor handelt, der einen Messstromkreis (20) für den Batterieladestrom des Mobiltelefons durch die private Basisstation beinhaltet.

4. Anlage gemäß einem der Ansprüche 1 bis 3, **dadurch gekennzeichnet, dass** die private Basisstation den Detektor, der die Anwesenheit in der privaten Basisstation erfasst, sowie den Steuerstromkreis beinhaltet.

5. Anlage gemäß einem der Ansprüche 1 bis 4, **dadurch gekennzeichnet, dass** das Mobiltelefon den Detektor, der die Anwesenheit in der privaten Basisstation erfasst, den Steuerstromkreis sowie den Slave-Stromkreis beinhaltet.

## Claims

1. A dual-mode telephone system comprising a private base station (1), base stations (3, 4) of a public network, and a mobile telephone (7), the mobile telephone being provided with a switch-over switch (9) for going from an operating mode in which the private base station is used to an operating mode in which a public base station is used and vice versa, and including a circuit (F1, F2) for transmitting a location signal (13) to a base station, the private base station being provided with physical holding means (16) and with electrical connection means (181-182) respectively for physically holding and for electrically connecting the mobile telephone, where the system includes a detector (19, 20) for detecting that the mobile telephone is held on the private base station, and the system being **characterized in that** it includes a control circuit (21) for transmitting a command (22) to cease transmission of said location signal, the mobile telephone including a slave circuit (23) for modifying its operating mode as a function of this command.

2. A system according to claim 1, **characterized in that** the location signal is cyclic or continuous.

3. A system according to claim 1 or 2, **characterized in that** the detector is an electronic detector and includes a circuit (20) for measuring a charging current by means of which the private base station charges the mobile telephone.

4. A system according to any one of claims 1 to 3, **characterized in that** the private base station includes the detector for detecting that the mobile telephone is held on the private base station, and the control circuit.

5. A system according to any one of claims 1 to 4, **characterized in that** the mobile telephone includes the detector for detecting that the mobile telephone is held on the private base station, the control circuit, and the slave circuit.
